**Europäisches Patentamt**

**European Patent Office**

**Office européen des brevets**

(19)

(11) Veröffentlichungsnummer : **0 325 811 B1**

(12) # EUROPÄISCHE PATENTSCHRIFT

(45) Veröffentlichungstag der Patentschrift :
**15.05.91 Patentblatt 91/20**

(51) Int. Cl.$^5$ : **B01D 53/36, B01J 27/053**

(21) Anmeldenummer : **88202795.6**

(22) Anmeldetag : **07.12.88**

(54) **Verfahren zur katalytischen Reduktion von NO.**

(30) Priorität : **22.01.88 DE 3801785**

(43) Veröffentlichungstag der Anmeldung :
**02.08.89 Patentblatt 89/31**

(45) Bekanntmachung des Hinweises auf die
Patenterteilung :
**15.05.91 Patentblatt 91/20**

(84) Benannte Vertragsstaaten :
**AT DE ES GB IT SE**

(56) Entgegenhaltungen :
**DE-A- 2 454 515**
**DE-A- 2 748 471**
**FR-A- 2 285 922**

(73) Patentinhaber : **METALLGESELLSCHAFT AG**
**Reuterweg 14 Postfach 3724**
**W-6000 Frankfurt/M.1 (DE)**

(72) Erfinder : **Fennemann, Wolfgang**
**Schlinkenweg 16**
**W-6367 Karben 6 (DE)**
Erfinder : **Weisweiler, Werner, Prof. Dr.**
**Goethering 107**
**W-7537 Remchingen-Singen (DE)**
Erfinder : **Retzlaff, Burkhard**
**Veilchenstrasse 9**
**W-7500 Karlsruhe (DE)**
Erfinder : **Hochstein, Bernd**
**Adlerstrasse 40**
**W-7500 Karlsruhe (DE)**

## Beschreibung

Die Erfindung bezieht sich auf ein Verfahren zur katalytischen Reduktion von in einem Gas enthaltenen NO mit dem Reduktionsmittel $NH_3$, bei dem das NO-haltige Gas mit $NH_3$ gemischt und die Mischung bei 290 bis 450°C sowie bei Normaldruck an einem Katalysator zur Reaktion gebracht wird, dessen Träger aus $SiO_2$ besteht und der 5 bis 15 Gew.% Mangansulfat und Eisensulfat enthält, wobei das Molverhältnis Mangansulfat zu Eisensulfat, letzteres berechnet als $FeSO_4$, 1 : 10 bis 10 : 1 beträgt.

Aus der DE-A-2 454 515 ist ein Verfahren zur katalytischen Reduktion von in Rauchgasen und Abgasen enthaltenen Stickstoffoxiden mit dem Reduktionsmittel $NH_3$ bekannt, bei dem ein Katalysator verwendet wird, der aus einem Träger aus $Al_2O_3$ oder $SiO_2$ sowie aus den katalytisch aktiven Substanzen $CuSO_4$, $MnSO_4$, $NiSO_4$, $FeSO_4$, $CoSO_4$, $ZnSO_4$ und/oder $Al_2(SO_4)_3$ besteht, wobei die katalytisch aktiven Substanzen im Katalysator in einer Menge von 0,05 bis 20 Gew.% vorliegen. Der zur Durchführung des bekannten Verfahrens verwendete Katalysator wird durch Imprägnieren eines Trägers mit einer wäßrigen metallsulfathaltigen Lösung sowie anschließendes Trocknen und Kalzinieren des imprägnierten Trägers hergestellt. Die katalytische NO-Reduktion erfolgt in einem Röhrenreaktor bei 350 bis 400°C.

Die DE-A-2 504 027 beschreib ein Verfahren zur selektiven katalytischen Reduktion von Stickoxiden in Abgasen, die neben Stickoxiden auch Schwefeloxide enthalten. Der bei diesem Verfahren verwendete Katalysator besteht aus einem Träger aus $SiO_2$ und-/oder $Al_2O_3$ sowie aus $FeSO_4$ und/oder $Fe_2(SO_4)_3$. Zur Reduktion des NO wird $NH_3$ bei einer Temperatur von 250 bis 550°C verwendet. Der Katalysator wird durch Tränken des Trägers mit einer wäßrigen Lösung von $FeSO_4$ und/oder $Fe_2(SO_4)_3$, anschließendes Trocknen bei einer Temperatur von 100 bis 150°C und nachfolgendes Brennen bei einer Temperatur von 300 bis 600°C hergestellt. Das aus der DE-A 2 504 027 bekannte Verfahren kann im Festbettreaktor, Wirbelbettreaktor oder Wabenzellenreaktor durchgeführt werden.

Es hat sich gezeigt, daß bei der Durchführung des eingangs genannten Verfahrens die Aktivität des Katalysators während eines langen Betriebszeitraumes nicht konstant ist und daß er daher in seiner Beschaffenheit modifiziert werden muß, wobei allerdings eine möglichst gute Umweltverträglichkeit des Katalysators anzustreben ist.

Der Erfindung liegt die Aufgabe zugrunde, das eingangs genannte Verfahren so weiterzubilden, daß es mit einem Katalysator arbeitet, der bei hoher Entstickungsleistung nur solche Elemente enthält, die keine Schädigungen der Umwelt hervorrufen, und der folglich ohne besondere Vorsichtsmaßnahmen dann auf einer Mülldeponie abgelagert werden kann, wenn er unbrauchbar geworden ist.

Die der Erfindung zugrundeliegende Aufgabe wird dadurch gelöst, daß der Katalysator pro Mol Mangansulfat und Eisensulfat 0,001 bis 0,01 Mol $Y_2(SO_4)_3$, $TiOSO_4$ oder $Zr(SO_4)_2$ enthält. Durch diese Verbindungen werden im Gitter des Trägers Fehlstellen geschaffen, die als aktive Zentren für die NO-Reduktion wirken und dem Katalysator eine Langzeitstabilität verleihen, so daß seine Aktivität auch während eines langen Betriebszeitraums konstant ist. Als Eisensulfat im Sinne der Erfindung gilt sowohl $FeSO_4$ als auch $Fe_2(SO_4)_3$. Es ist möglich, den Katalysator nach Gebrauch auf einer Mülldeponie abzulagern, da die Elemente Y, Ti und Zr im Erdreich vorkommen und im Katalysator nur in sehr geringer Menge vorhanden sind. Die Umweltverträglichkeit des Katalysators beruht auch darauf, daß er vergleichsweise geringe Gehalte an löslichen Verbindungen des Mangans und Eisens enthält, die zwar im Erdreich mobilisiert werden können, dort jedoch hydrolisieren, wobei feste Hydroxide und Hydroxidoxide des Eisens und Mangans entstehen, die in der Natur ohnehin allgegenwärtig sind und keine umweltschädigenden Wirkungen haben.

In weiterer Ausgestaltung der Erfindung ist vorgesehen, daß der Träger ein Porenvolumen von 0,6 bis 1,6 ml/g und einen mittleren Porendurchmesser von 10 bis 100 nm hat. Ein so beschaffener Träger verleiht dem Katalysator eine hohe Leistung. Ferner hat es sich nach der Erfindung als zweckmäßig erwiesen, daß das $SiO_2$ des Trägers eine Reinheit von 97 bis 99,9% aufweist. Es wurde nämlich gefunden, daß sich die Leistungsfähigkeit des Katalysators erhöht und die Schwankung der Katalysatorleistung vermindert, wenn die Reinheit des $SiO_2$-Trägers wächst. Bei den im $SiO_2$ enthaltenen Verunreinigungen handelt es sich vorzugsweise um die Oxide des Aluminiums, Eisens und Titans.

## Ansprüche

1. Verfahren zur katalytischen Reduktion von in einem Gas enthaltenen NO mit dem Reduktionsmittel $NH_3$, bei dem das NO-haltige Gas mit $NH_3$ gemischt und die Mischung bei 2.90 bis 450°C sowie bei Normaldruck an einem Katalysator zur Reaktion gebracht wird, dessen Träger aus $SiO_2$ besteht und der 5 bis 15 Gew.% Mangansulfat und Eisensulfat enthält, wobei das Molverhältnis Mangansulfat zu Eisensulfat, letzteres berechnet als $FeSO_4$, 1 : 10 bis 10 : 1 beträgt, dadurch gekennzeichnet, daß der Katalysator pro Mol Eisensulfat und Mangansulfat 0,001 bis 0,01 Mol $Y_2(SO_4)_3$, $TiOSO_4$ oder $Zr(SO_4)_2$ enthält.

2. Verfahren nach Anspruch 1, dadurch gekennzeichnet, daß der Träger ein Porenvolumen von 0,6 bis 1,6 ml/g und einen mittleren Porendurchmesser von 10 bis 100 nm hat.

3. Verfahren nach den Ansprüchen 1-2, dadurch gekennzeichnet, daß das SiO$_2$ des Trägers eine Reinheit von 97 bis 99,9 % hat.

## Claims

1. Method for the catalytic reduction of NO contained in a gas using the reduction agent NH$_3$, in which the NO-containing gas is mixed with NH$_3$ and the mixture is caused to react on a catalyst at 290 to 450°C and at normal pressure, the carrier of which catalyst consists of SiO$_2$ and which contains 5 to 15% by weight manganese sulphate and iron sulphate, with the molar ratio of manganese sulphate to iron sulphate, the latter calculated as FeSO$_4$, being 1 : 10 to 10 : 1, characterised in that the catalyst contains 0.001 to 0.01 mole Y$_2$(SO$_4$)$_3$, TiOSO$_4$ or Zr(SO$_4$)$_2$ per mole iron sulphate and manganese sulphate.

2. Method according to Claim 1, characterised in that the carrier has a pore volume of 0.6 to 1.6 ml/g and an average pore diameter of 10 to 100 nm.

3. Method according to Claims 1-2, characterised in that the SiO$_2$ of the carrier has a purity of 97 to 99.9%.

## Revendications

1. Procédé de réduction catalytique du NO contenu dans un gaz par l'agent réducteur qu'est NH$_3$, qui consiste à mélanger le gaz contenant du NO à du NH$_3$ et à faire réagir le mélange entre 290 et 450°C ainsi qu'à la pression normale sur un catalyseur, dont le support est en SiO$_2$ et qui contient de 5 à 15% en poids de sulfate de manganèse et de sulfate de fer, le rapport molaire du sulfate de manganèse au sulfate de Fer, ce dernier étant exprimé en FeSO$_4$, étant compris entre 1 : 10 et 10 : 1, caractérisé en ce que le catalyseur contient, par mole de sulfate de fer et de sulfate de manganèse, de 0,001 à 0,01 mole de Y$_2$(SO$_4$)$_3$, de TiOSO$_4$ ou de Zr(SO$_4$)$_2$.

2. Procédé suivant la revendication 1, caractérisé en ce que le support a un volume de pores de 0,6 à 1,6 ml/g et un diamètre moyen de pores de 10 à 100 nm.

3. Procédé suivant la revendication 1 ou 2, caractérisé en ce que le SiO$_2$ du support a une pureté de 97 à 99,9 %.